(19) Europäisches Patentamt / European Patent Office / Office européen des brevets

(11) **EP 2 050 805 B1**

(12) **EUROPÄISCHE PATENTSCHRIFT**

(45) Veröffentlichungstag und Bekanntmachung des Hinweises auf die Patenterteilung:
**03.03.2010 Patentblatt 2010/09**

(51) Int Cl.:
*C09K 3/14* (2006.01)          *B24D 3/00* (2006.01)
*B24D 11/00* (2006.01)

(21) Anmeldenummer: **07020212.2**

(22) Anmeldetag: **16.10.2007**

(54) **Ummantelte Schleifkörner, Verfahren zu ihrer Herstellung sowie ihre Verwendung zur Herstellung von Schleifmitteln**

Coated abrasive grit, method for its manufacture and its application in manufacturing abrasive agents

Grains abrasifs enveloppés, leur procédé de fabrication ainsi que leur utilisation pour la production de produits abrasifs

(84) Benannte Vertragsstaaten:
**AT BE BG CH CY CZ DE DK EE ES FI FR GB GR HU IE IS IT LI LT LU LV MC MT NL PL PT RO SE SI SK TR**

(43) Veröffentlichungstag der Anmeldung:
**22.04.2009 Patentblatt 2009/17**

(73) Patentinhaber: **C.A.R.R.D. GmbH**
**9524 Villach (AT)**

(72) Erfinder: **Gebhardt, Knuth, Dr.**
**9580 Drobollach (AT)**

(74) Vertreter: **Patentanwälte**
**Westphal, Mussgnug & Partner**
**Am Riettor 5**
**78048 Villingen-Schwenningen (DE)**

(56) Entgegenhaltungen:
**EP-A- 0 014 236          WO-A-2004/053013**
**DE-C1- 3 147 597          US-A- 4 311 489**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft Schleifkörner aus der Gruppe der konventionellen Schleifkörner, wie z.B. Korund, Schmelzkorund, Sinterkorund, Zirkonkorund, Siliziumcarbid und Borcarbid, sowie aus der Gruppe der Superabrasives, wie z.B. kubisches Bornitrid und Diamant, und/oder Gemische davon, die mit einem anorganischen Binder und einem feinstteiligen anorganischen Pulver ummantelt sind. Die vorliegende Erfindung betrifft auch ein Verfahren zur Herstellung derartiger Schleifkörner sowie ihre Verwendung in Schleifmitteln.

Schleifkörner werden in den unterschiedlichsten Korngrößen in gebundener und loser Form für die verschiedenartigsten Schleifprozesse eingesetzt, mit denen sämtliche bekannten Werkstoffe bearbeitet werden können. Bei der Verwendung von Schleifkörnern in gebundener Form unterscheidet man zwischen den sogenannten gebundenen Schleifmitteln, worunter man Schleifscheiben, Schleifsteine oder auch Schleifstifte versteht, bei denen die Schleifkörner mit einer keramischen Masse oder einem Kunstharz zu dem entsprechenden Schleifkörper geformt werden und anschließend durch eine Wärmebehandlung verfestigt werden, sowie den Schleifmitteln auf Unterlage bzw. flexiblen Schleifmitteln, bei denen die Schleifkörner mit Hilfe eines Binders (Kunstharz) auf einer Unterlage (Papier oder Leinen) fixiert werden.

Die Leistungsfähigkeit der verschiedenen Schleifmitteln hängt nun nicht allein vom eingesetzten Schleifkorn, sondern in hohem Maße auch von der Einbindung des Schleifkorns im Schleifmittel ab. Dabei kommt der Grenzfläche zwischen Schleifkorn und Binderphase eine besondere Bedeutung zu, da diese die Kraft bestimmt, die erforderlich ist, um ein Schleifkorn aus einer Bindung herauszubrechen. Je härter und zäher ein Schleifkorn ist, desto größer sind auch die Anforderungen an die Bindung und die Haftkräfte an den Grenzflächen. Die meisten Schleifkörnungen, insbesondere diejenigen, die durch einen Schmelzprozess hergestellt werden, besitzen eine relativ glatte Oberfläche, was sich für die Einbindung als nachteilig erweist. So sind Schleifoperationen keine Seltenheit, bei denen mehr als 50% des Schleifkorns durch Herausbrechen aus der Bindung verloren geht und damit überhaupt nicht zum eigentlichen Schleifeinsatz kommt.

In der Vergangenheit wurden daher bereits eine Vielzahl von Maßnahmen zur Aufrauung bzw. Vergrößerung der Oberfläche des Schleifkorns und damit zur verbesserung seiner Einbindung vorgeschlagen und ergriffen. Die meisten dieser Maßnahmen basieren darauf, auf die Oberfläche des Schleifkorns feinstteilige Pigmente oder Pulver aufzubringen und diese fest mit dem Schleifkorn zu verbinden. Dazu wird die Oberfläche des Schleifkorns in der Regel mit einem Bindemittel benetzt und anschließend mit einem anorganischen Pigment oder Pulver vermischt, sodass die Kornoberfläche nach Möglichkeit gleichmäßig und homogen mit einer Schicht von Feinstpartikeln ummantelt ist. Anschließend werden die so behandelten Schleifkörner einer Wärmebehandlung unterzogen, bei der die Bindung zwischen Feinkornpartikeln und Schleifkorn verfestigt wird.

Als Binder werden häufig silikatische Binder eingesetzt, wie z.B. Wasserglas oder kolloidale Kieselsäure. Ein Nachteil dieser Behandlung besteht darin, dass relativ hohe Temperaturen erforderlich sind, um eine Verfestigung des Binders zu erreichen, sodass für derartige Behandlungen nicht nur relativ viel Energie verbraucht wird, sondern auch temperaturempfindliche Schleifkörner von einer Ummantelung dieser Art ausgeschlossen sind.

So wird in der US 2,527,044 A ein geschmolzenes Aluminiumoxid- oder Siliziumcarbidschleifkorn beschrieben, das zur Verbesserung der Einbindung insbesondere in kunstharzgebundenen Schleifmitteln mit einem Überzug aus feinkörnigen Metalloxidpartikeln, beispielsweise Eisen(3)oxid oder Molybdänoxid, überzogen ist. Als Binder wird in diesem Fall eine niedrig schmelzende Glasfritte eingesetzt und die Temperatur der oxidierenden Wärmebehandlung liegt zwischen 1350° und 1500°F, was einer Temperatur von 732°C bis 1222°C entspricht. Für temperaturempfindliche und/ oder oxidationsempfindliche Schleifkörner, wie z.B. eutektischer Zirkonkorund, kubisches Bornitrid oder Diamant, ist eine solche Behandlung nicht geeignet.

In der EP 0 014 236 A1 wird die Behandlung von Schleifkorn auf Basis von Aluminiumoxid beschrieben, wobei auf das Schleifkorn eine Schicht aus einer keramischen Masse, wie z.B. Tone, Kaolin oder Glasfritten, aufgeschmolzen oder aufgesintert wird. Gleichzeitig soll mit dem Aufsintern oder Aufschmelzen der Ummantelung eine Umwandlung des im Korund enthaltenen Titanoxids von der dreiwertigen in die vierwertige Oxidationsstufe stattfinden. Dieses Ummantelungsverfahren ist somit ausschließlich für Schleifkörner geeignet, die neben Aluminiumoxid Anteile an Titanoxid aufweisen. Hinzu kommt, dass die Wärmebehandlung bei einer Temperatur von 1250°C bis 1350°C erfolgen soll und unter oxidierenden Bedingungen stattfindet, sodass diese Behandlung ebenfalls für oxidations- und temperaturempfindlichen Schleifkörner ausscheidet.

Niedrigere Temperaturen für die Wärmebehandlung sind mit Phosphatbindern oder organischen Bindern, wie z.B. Kunstharz, realisierbar. Diese Binder haben jedoch den Nachteil, dass sie über eine relativ geringe Adhäsionskraft zum Schleifkorn verfügen und somit die Festigkeit der Ummantelung auf der Oberfläche mangelhaft ist.

In der DE 102 57 554 A1 werden Schleifkörner aus der Gruppe der konventionellen Schleifkörner, insbesondere geschmolzene oder gesinterte Korunde, Zirkonkorunde, Siliziumcarbid und Borcarbid, für den Einsatz in kunstharzgebundenen Schleifmitteln beschrieben, die oberflächlich mit einer Ummantelung aus einem wässrigen Bindemittel auf Silicatbasis und einer feinkörnigen Oxidverbindung versehen sind. Bei der feinkörnigen Oxidverbindung handelt es sich um eine komplexe Verbindung der allgemeinen Formel $A_xB_yO_z$ mit einem Element A aus der Gruppe der Metalle und einem Element B aus Gruppe der amphoteren Elemente sowie Sauerstoff im stöchiometrischen Verhältnis zu A und B.

Für die Wärmebehandlung ist ein Temperaturbereich zwischen 100° und 900°C vorgesehen und es können nach einer Wärmebehandlung des ummantelten Schleifkorns bei 400°C deutliche Leistungssteigerungen gegenüber einem unbehandelten Schleifkorn erzielt werden. Genauere Untersuchungen derartig behandelter Schleifkörner, insbesondere die Ermittlung der Bindekraft mit Hilfe von akustischer Kavitation, haben ergeben, dass die Bindung der Oxidverbindung an der Oberfläche relativ schwach ist und dass diese Leistungssteigerungen erzielt wurden, obwohl die Bindung der Ummantelung an der Schleifkornoberfläche schwach ist und die Leistungssteigerungen möglicherweise auf die Kristallstruktur des Pigments (Rutilgitter) und die Zusammensetzung des Pigments mit einem amphoteren Element, welches möglicherweise als Schleifhilfsmittel den Schleifprozess unterstützt, zurückzuführen sind.

Es besteht somit weiterhin das Problem, ein Bindersystem für eine Ummantelung von Schleifkörnern zu finden, das die Nachteile des Standes der Technik nicht aufweist und schon bei tiefen Temperaturen eine feste Bindung mit der Schleifkornoberfläche ausbildet. Mit einem derartigen Bindersystem sollten weitere Verbesserungen der Schleifleistungen, insbesondere bei thermisch instabilen Schleifkörnern erzielt werden können. Im Mittelpunkt des Interesses steht dabei insbesondere die Behandlung von eutektischem Zirkonkorund, dessen thermische Zersetzung bei Temperaturen oberhalb 400°C durch Modifikationsumwandlungen des Zirkonoxids und damit verbundene Volumenveränderungen beginnt.

Gelöst wird die Aufgabe durch ummantelte Schleifkörner mit einem Bindersystem mit den Merkmalen des Anspruchs 1. Bevorzugte Ausführungsformen sind Gegenstand der Unteransprüche.

Aufgabe der Erfindung ist es auch, ein Verfahren zur Herstellung solcher ummantelter Schleifkörner zur Verfügung zu stellen sowie die Verwendung der ummantelten Schleifkörner in Schleifmitteln aufzuzeigen.

Bereits 1976 wurden in der Veröffentlichung J. Davidovits: Solid phase synthesis of a mineral blockpolymer by low temperature polycondensation of aluminosilicate polymers. I.U.P.A.C. International Symposium on Macromolecules, Stockholm; Sept. 1976; Topic III, New Polymers of high stability. (1976) ein neuer Typ von keramischen Werkstoffen beschrieben, die später unter dem Begriff der Geopolymere bekannt wurden. Als Geopolymere wird eine Gruppe von aluminosilikatischen Werkstoffen bezeichnet, die ähnlich wie organische Polymere über einen Polykondensationsprozess hergestellt werden können, dabei aber rein anorganischer Natur sind und somit eine hohe thermische und chemische Stabilität aufweisen. Die Grundbausteine der Geopolymere bilden $SiO_4$- und $AlO_4$-Tetraeder, die bei der Geopolymerisation zu dreidimensionalen Netzen zusammenlagern.

In der EP 0 518 962 B1 werden Bindemittel auf Basis von Geopolymeren beschrieben, die neben den Silikat- und Aluminatgruppen mindestens ein komplexes Alkalifluorid umfassen, das die Erhärtungsgeschwindigkeit der Geopolymere herabsetzt und damit die Polykondensation steuert.

Als Binder für Ummantelungen für Schleifkörner sind Geopolymere bisher von den Fachleuten nicht in Betracht gezogen bzw. eingesetzt worden, da die Bildung von Geopolymeren hohe Feststoffkonzentration erfordert, wobei die Konzentration der Trockensubstanz oberhalb von 60 Gew.-% liegen muss, damit eine Polykondensation abläuft. Bei der Ummantelung von Schleifkörnern dagegen setzt man üblicherweise mit Wasser stark verdünnte Binder ein um eine homogene und dünne Beschichtung der Oberfläche mit Bindemittel zu erreichen. Üblicherweise werden dazu verdünnte industrielle Wassergläser oder kolloidale Kieselsäuren eingesetzt, deren Feststoffgehalt weit unter den für die Geopolymere geforderten 60 Gew.-% liegt.

Überraschenderweise wurde nun gefunden, dass es mit Hilfe einer reaktives $Al_2O_3$ und $SiO_2$ (Aluminosilikat) enthaltenen und mit Wasser verdünnten Bindermischung gelingt, bei Temperaturen unterhalb von 400°C eine äußerst fest haftende Ummantelung auf die Oberfläche von Schleifkörnern aufzubringen, in die feinstteilige anorganische Pulver bzw. anorganische oxidische Pigmente zur Oberflächenvergrößerung eingebunden werden können. Dies war um so überraschender, da bei dem erfindungsgemäßen Verhältnis von $Al_2O_3$ zu $SiO_2$ üblicherweise keine festen dichten Geopolymere ausgebildet werden, sondern sich reine viskose Silikatphasen bilden, die nicht an dem dreidimensionalen Netzwerk teilnehmen und sich beim Erwärmen üblicherweise aufblähen und Blasen bilden, sodass in diesem Fall bei Temperaturen über 300°C normalerweise ein poröser Körper entsteht.

Als Ausgangsstoffe für das Aluminosilikat können Metakaoline, Flugaschen, Hüttenschlacken, Gesteinsstäube, Feinsande und aktivierte Tone eingesetzt werden. Diese Materialien sind äußerst feinteilig und besitzen eine ausreichende Aktivität, um durch Polykondensationsreaktionen der silikatischen und aluminosilikatischen Baugruppen aluminosilikatische Gele auszubilden. Neben diesen Rohstoffen, die in großen Mengen als Neben- und Abfallprodukte der Energiegewinnung und aus der Grundstoffindustrie anfallen, können jedoch auch beliebig andere Materialien eingesetzt werden, die Aluminiumoxid und Siliziumoxid in ausreichender Menge und in ausreichend reaktiver Form enthalten, um die Polykondensationsreaktion einzuleiten und ein dreidimensionales Netzwerk aus $SiO_4$- und $AlO_4$ -Tetraeder auszubilden. So hat es sich gezeigt, dass statt des Aluminiumsilikats auch reaktive Aluminiumoxide bzw. Aluminiumhydroxide zusammen mit $SiO_2$-reichen Wassergläsern eingesetzt werden können.

Neben dem Aluminosilikat, das vorzugsweise in einem molaren Mengenverhältnis von $Al_2O_3$ zu $SiO_2$ von 1:2 bis 1:20 eingesetzt wird, enthält das Bindersystem Wasserglas, Wasser und in einer bevorzugten Ausgestaltung der vorliegenden Erfindung mindestens ein komplexes Alkalifluorid. Bezogen auf das unbehandelte Schleifkorn werden dabei ca. 0.01 bis ca. 10.0 Gew.-% Binder eingesetzt, wobei sich der Binder zusammensetzt aus ca. 0.005 bis ca. 4.0 Gew.-% Wasserglas, ca. 0.005 bis ca. 4.0 Gew.-% Wasser, ca. 0.005 bis ca. 1.0 Gew.-% Aluminosilikat und ca. 0.001 bis ca. 1.0 Gew.-% komplexes Alkalifluorid, wobei sich die Anteile jeweils auf das unbehandelte Schleifkorn beziehen.

Das mindestens eine komplexe Alkalifluorid ist ausgewählt aus der Gruppe $Na_3AlF_6$, $K_2NaAlF_6$, $Na_2SiF_6$, $K_2SiF_6$, $NaBF_4$ und $KBF_4$.

Neben den oben aufgeführten Bestandteilen kann der Binder zusätzlich Füllstoffe und/oder Schleifhilfsmittel umfassen. Zu diesem Zweck können sämtlich bekannten Füllstoffe und Schleifhilfsmittel aus der Gruppe der Sulfide, Phosphate, Carbonate und/oder Halogenide und/oder sulfid-, phosphat-, carbonat- und/oder halogenidhaltige Komplexverbindungen aus der Gruppe der Elemente Natrium, Lithium, Kalium, Magnesium, Kalzium, Aluminium, Mangan, Kupfer, Zink, Eisen, Titan, Antimon und/oder Zinn eingesetzt werden.

Das feinstteilige anorganische Pulver ist in der Regel ein Oxidpigment, das zu 0.05 bis ca. 5.0 Gew.-%, bezogen auf das unbehandelte Schleifkorn eingesetzt wird, wobei eine bevorzugte Ausgestaltung der vorliegenden Erfindung eine Menge von ca. 0.1 bis ca. 2.0 Gew.-% feinstteiliges anorganisches Pulver, bezogen auf das unbehandelte Schleifkorn, vorsieht.

Der Binder kann bei Temperaturen unterhalb von 400°C ausgehärtet werden und erreicht unter diesen Bedingungen eine außerordentliche Festigkeit, die deutlich über den Festigkeiten liegt, die mit Bindern nach dem Stand der Technik bei diesen Temperaturen erreicht werden.

Das Ummantelungsverfahren selbst ist relativ unkompliziert, wobei zunächst die Schleifkörner mit dem Binder in einem Intensivmischer benetzt werden, anschließend werden die benetzten Schleifkörner mit einem feinstteiligen anorganischen Pulver versetzt und solange vermischt bis das feinstteilige anorganische Pulver gleichmäßig auf der Oberfläche der Schleifkörner verteilt ist. Das Aushärten der Ummantelung erfolgt bei einer Temperatur unterhalb von 400°C beispielsweise in einem Drehrohrofen.

Verwendung finden die so hergestellten ummantelten Schleifkörner zur Herstellung von Schleifmitteln, insbesondere von Schleifmitteln auf Unterlage.

Im Folgenden wird die vorliegende Erfindung anhand von Beispielen ausführlich erläutert.

Beispiele

Ermittlung der Bindekraft

Im Falle eines ummantelten Schleifkorns kann die Qualität des Binders, also die Festigkeit, mit der das Pigment gebunden ist, mit Hilfe akustischer Kavitation abgeschätzt werden. Bei dieser Methode wird das behandelte Schleifkorn in einem Glasgefäß mit Wasser überschichtet und mit Ultraschallwellen beschallt. Durch die intensive Beschallung entstehen kleine Vakuumbläschen, sogenannte Kavitationen, die insbesondere an Festkörperoberflächen implodieren und dabei schlagartig hohe Temperaturen und Drücke, sogenannte "Microjets", erzeugen. Durch diese "Microjets" werden schwach gebundene Partikel an der Schleifkornoberfläche gelöst und abgetrennt. Die Menge an abgetrennten Partikeln wird dann in der dekantierten Suspension mit photometrischen Methoden als Trübungswert (NTU-Wert) bestimmt.

Beispiel 1 und 2, Vergleichsbeispiele 1 und 2

Es wurden jeweils 1 Kilogramm Schleifkorn (eutektischer Zirkonkorund, Alodur ZK40 P 36, Treibacher Schleifmittel) mit einem Bindersystem in einem Laborfreifallmischer vorgelegt und 5 Minuten gemischt. Anschließend wurde ein Pigment zugegeben und das Schleifkorn wurde mit Binder und Pigment für weitere 5 Minuten gemischt. Das so erhaltene Rohmaterial wurde dann für 20 Minuten an der Luft getrocknet und anschließend bei 350° C für 15 Minuten im Drehrohrofen thermisch behandelt.

Es wurden jeweils 5 Gramm des so ummantelten Schleifkornes mit jeweils 10 ml Wasser in einem Rollrandglas überschichtet und in einem Ultraschallbad (Haver USC 200) für eine Minute mit Ultraschall behandelt. Die Pigmentkonzentration im überstehenden Wasser wurde anschließend mit einem Photometer (WTW Turbo 550) als NTU-Wert bestimmt. Bei dieser Versuchsreihe wurde Kaliwasserglas 42/43 (Mörsil H, Cognis Deutschland GmbH) als Wasserglas, Metakaolin (Metastar 501, Imerys Minerals Ltd.) als Aluminosilikat, $K_2SiF_6$ (Brenntag CEE GmbH) als Alkalifluorid sowie PK 12100 (Ferro Corp.) mit der ungefähren Zusammensetzung 10 Gew.-% $MnO_2$, 24 Gew.-% $Sb_2O_3$ und 66 Gew.-% $TiO_2$ als Oxidpigment eingesetzt.

Die Binderzusammensetzung sowie die photometrischen Messergebnisse (NTU-Wert; umgekehrt proportional der Bindefestigkeit) sind in der Tabelle 1 zusammengefasst.

Tabelle 1

| Muster | Binderzusammensetzung (g) | | | | Oxid-pigment (g) | NTU-Wert |
|---|---|---|---|---|---|---|
| | Wasserglas | Wasser | Aluminosilikat | Alkalifluorid | | |
| Beispiel 1 | 3.6 | 2.4 | 0.15 | 0.3 | 2.0 | 550 |
| Vergleichsbeispiel 1 | 3.6 | 2.4 | - | 0.3 | 2.0 | 902 |
| Vergleichsbeispiel 2 | 3.6 | 2.4 | - | - | 2.0 | >> 1000 |
| Beispiel 2 | 3.6 | 2.4 | 0.15 | - | 2.0 | 817 |

Aus den Ergebnissen der Tabelle 1 ist ersichtlich, dass die Bindekraft der Ummantelung im erfindungsgemäßen Beispiel 1 deutlich über dem Wert der Vergleichsbeispiele liegt. Dabei entspricht das Vergleichsbeispiel 1 einer konventionellen Ummantelung nach dem Stand der Technik mit Wasserglas, wobei dem Binder zusätzlich ein komplexes Alkalifluorid zugegeben wurde. Vergleichsbeispiel 2 entspricht einer rein konventionellen Ummantelung mit Wasserglas als Binder und einem Oxidpigment ohne weitere Zusätze. Beim Beispiel 2 wurde auf das Alkalifluorid verzichtet. Den NTU-Werten der obigen Tabelle ist zu entnehmen, dass die Wirkung des Aluminosilikats als Binder für die Ummantelung eines Schleifkorns insbesondere in Kombination mit einem Alkalifluorid zur vollen Entfaltung kommt.

Beispiele 3 bis 13

Es wurden wieder wie in Beispiel 1 jeweils 1 Kilogramm Schleifkorn (eutektischer Zirkonkorund, Alodur ZK40 P 36, borfreifallmischer vorgelegt und 5 Minuten gemischt. Anschließend wurde das Pigment (PK 12100, Ferro Corp.) zugegeben und das Schleifkorn wurde mit Binder und Pigment für weitere 5 Minuten gemischt. Die so erhaltene Mischung wurde anschließend für 20 Minuten an der Luft getrocknet und dann bei 350° C für 15 Minuten im Drehrohrofen thermisch behandelt.

Es wurden jeweils 5 Gramm des so ummantelten Schleifkornes mit jeweils 10 ml Wasser in einem Rollrandglas überschichtet und in einem Ultraschallbad (Haver, USC 200) für eine Minute mit Ultraschall behandelt. Die Pigmentkonzentration im überstehenden Wasser wurde anschließend mit einem Photometer (WTW Turbo 550) als NTU-Wert bestimmt.

Bei dieser Versuchsreihe wurde Kaliwasserglas 42/43 (Mörsil H, Cognis Deutschland GmbH) als Wasserglas, Metakaolin (Metastar 501, Imerys Minerals Ltd.) als Quelle für Aluminosilikat, $K_2SiF_6$ (Brenntag CEE GmbH) als Alkalifluorid und PK 12100 (Ferro) als Oxidpigment eingesetzt.

Die Binderzusammensetzung sowie die photometrischen Messergebnisse (NTU-Wert; umgekehrt proportional der Bindefestigkeit) sind in der Tabelle 2 zusammengefasst.

Tabelle 2

| Muster (1 kg) | Binderzusammensetzung (g) | | | | Oxid-pigment (g) | NTÜ-Wert |
|---|---|---|---|---|---|---|
| | Wasserglas | Wasser | Aluminosilikat | Alkalifluorid | | |
| Beispiel 3 | 3.6 | 2.4 | 0.05 | 0.3 | 2.0 | 557 |
| Beispiel 4 | 3.6 | 2.4 | 0.1 | 0.3 | 2.0 | 452 |
| Beispiel 5 | 3.6 | 2.4 | 0.3 | 0.3 | 2.0 | 196 |
| Beispiel 6 | 3.6 | 2.4 | 0.6 | 0.3 | 2.0 | 364 |
| Beispiel 7 | 3.6 | 2.4 | 1.0 | 0.3 | 2.0 | 489 |
| Beispiel 8 | 3.6 | 2.4 | 0.3 | 0.0 | 2.0 | 789 |
| Beispiel 9 | 3.6 | 2.4 | 0.3 | 0.15 | 2.0 | 268 |
| Beispiel 10 | 3.6 | 2.4 | 0.3 | 0.6 | 2.0 | 241 |
| Beispiel 11 | 3.6 | 2.4 | 0.3 | 0.9 | 2.0 | 406 |
| Beispiel 12 | 3.6 | 2.4 | 0.3 | 1.2 | 2.0 | 529 |
| Beispiel 13 | 3.6 | 2.4 | 0.1 | 0.9 | 2.0 | 307 |

**EP 2 050 805 B1**

Aus den Ergebnissen der Tabelle 2 ist ersichtlich, dass die Mengen an Aluminosilikat und komplexem Fluorid über einen relativ weiten Bereich variiert werden können, ohne dass es zu einem Abfall der Bindefestigkeit kommt. Der optimale Bereich für die Ummantelung eines relativ groben Schleifkorns (P 36) mit einem mittleren Korndurchmesser von ca. 500 μm scheint für das Aluminosilikat zwischen ca. 0.001 und ca. 0.006 Gew.-% und der für das komplexe Alkalifluorid zwischen ca. 0.003 und ca. 0.01 Gew.-%, bezogen auf das Schleifkorn, zu liegen. Bei feineren Schleifkörnern, die pro kg Schleifkörnung eine entsprechend größere Oberfläche aufweisen, müssen dementsprechend größere Mengen an Bindermischung eingesetzt werden.

Aus dem Beispiel 8 ist ersichtlich, dass sich das Fehlen des komplexen Alkalifluorids sehr stark auf die Bindefestigkeit auswirkt. Wie das Beispiel 3 zeigt, reichen bei Anwesenheit von Alkalifluorid bereits kleine Mengen an Aluminosilikat aus, um eine deutliche Steigerung des Bindefestigkeit zu erreichen,

Beispiele 14 und 15, Vergleichsbeispiel 3

Bei den Beispielen 14 und 15 wurde der Schleifkorntyp variinert, wobei Siliziumcarbid und Edelkorund Weiß alternativ zum Zirkonkorund als konventionelle Schleifkörner eingesetzt wurden.

Es wurde wieder jeweils 1 Kilogramm konventionelles Schleifkorn mit einem Bindersystem in einem Laborfreifallmischer vorgelegt und 5 Minuten gemischt. Anschließend wurde das Pigment zugegeben und das Schleifkorn wurde mit Binder und Pigment für weitere 5 Minuten gemischt, wobei die Bindermischung und das Oxidpigment analog zu Beispiel 4 eingesetzt wurde. Das so erhaltene Material wurde dann für 20 Minuten an der Luft getrocknet und anschließend bei 350° C für 15 Minuten im Drehrohrofen thermisch behandelt.

Die Bindefestigkeit wurde in Analogie zu den oben beschriebenen Beispielen bestimmt. Bei dieser Versuchsreihe wurden als Schleifkörnungen Normalkorund (Alodur ESK P 36, Treibacher) und SiC (Alodur SiC, P 36, Treibacher) eingesetzt. Im Vergleichsbeispiel 5 wurde Normalkorund konventionell mit Wasserglas und Oxidpigment ummantelt.

Die Binderzusammensetzung sowie die photometrischen Messergebnisse (NTU-Wert; umgekehrt proportional der Bindefestigkeit) sind in der Tabelle 3 zusammengefasst.

Tabelle 3

| Muster (1 kg) | Binderzusammensetzung (g) | | | | Oxid-pigment (g) | NTU-Wert |
|---|---|---|---|---|---|---|
| | Wasserglas | Wasser | Aluminosilikat | Alkalifluorid | | |
| Beispiel 14 SiC | 3.6 g | 2.4 g | 0.3 g | 0.3 g | 2.0 g | 438 |
| Beispiel 15 ESK | 3.6 g | 2.4 g | 0.3 | 0.3 g | 2.0 g | 523 |
| Vergleichsbeispiel 3 ESK | 3.6 g | 2.4 g | - | - | 2.0 g | >> 1000 |

Die Ergebnisse in Tabelle 3 zeigen, dass die bei Zirkonkorund erzielten Ergebnisse auch auf andere konventionelle Schleifkornsorten, wie z.B. Siliziumcarbid oder Normalkorund übertragbar sind.

Beispiele 16 und 17, Vergleichsbeispiele 4 und 5 (CBN,Diamant)

Es wurden jeweils 500 Karat kubisches Bornitrid (SBN-B B 151; 100/120 mesh, Showa Denko KK) bzw. 500 Karat Diamant (RVG D 126; 100/120 mesh, Diamond Innovation) mit einem zu Beispiel 4 analogem Bindersystem in einem Spezial-Labormischer vorgelegt und 5 Minuten intensiv gemischt. Anschließend wurde das Pigment zugegeben und das Schleifkorn wurde mit Binder und Pigment für weitere 5 Minuten gemischt. Das so erhaltene Kornmaterial wurde dann für 20 Minuten an der Luft getrocknet und anschließend bei 350° C für 15 Minuten im Drehrohrofen thermisch behandelt.

Die Bindefestigkeit wurde in Analogie zu den oben aufgeführten Beispielen mit Hilfe der akustischen Kavitation bestimmt.

Die Binderzusammensetzung sowie die photometrischen Messergebnisse (NTU-Wert umgekehrt proportional der Bindefestigkeit) sind in der Tabelle 4 zusammengefasst.

Tabelle 4

| Muster (500 ct) | Binderzusammensetzung (g) | | | | Oxid-pigment (g) | NTU-Wert |
|---|---|---|---|---|---|---|
| | Wasserglas | Wasser | Aluminosilikat | Alkalifluorid | | |
| Beispiel 14 Diamant | 2.0 g | 1.0. g | 0.15 g | 0.15 g | 1.0 g | 812 |
| Beispiel 15 CBN | 2.0 g | 1.0 g | 0.15 g | 0.15 g | 1.0 g | 734 |
| Vergleichsbeispiel 6 Diamant | 2.0 g | 1.0 g | - | - | 1.0 g | >>1000 |
| Vergleichsbeispiel 7 CBN | 2.0 g | 1.0 g | - | - | 1.0 g | >>1000 |

Bei der Behandlung der Superabrasives CBN und Diamant wurde, berechnet auf ein Teil Schleifkorn, etwa die fünffache Menge an Binderzusammensetzung eingesetzt, was sich daraus erklärt, dass in diesem Fall eine Körnung mit einem mittleren Korndurchmesser von ca. 100 μm eingesetzt wurde und somit pro Gewichtseinheit Schleifkorn entsprechend mehr Oberfläche zu behandeln war. Insgesamt wurde, berechnet auf die Oberfläche, eine im Vergleich zu den konventionellen Schleifkörnern vergleichbare Menge an Bindemittel eingesetzt. Die Ergebnisse in Tabelle 4 zeigen, dass auch bei den Superabrasives mit dem erfindungsgemäßen Bindersystem bei milden Reaktionsbedingungen relativ hohe Bindefestigkeiten erzielt werden können, die allerdings etwas weniger stark ausfallen im Vergleich zu den konventionellen Schleifkörnern, was möglicherweise darauf zurückzuführen ist, dass bei den konventionellen Schleifkörnern eine stärkere Bindung an der Schleifkornoberfläche über Sauerstoffbrücken stattfindet.

Beispiele 18 bis 21

In der Versuchsreihe mit den Beispielen 18 bis 21 wurden als Ausgangsmaterialen für Aluminosilikat Flugasche (Holcim AG, Deutschland) bzw. eine Mischung aus reaktivem Aluminiumhydroxid (Pseudoböhmit, Sasol Germany) und reaktivem Siliziumoxid (Hochdisperse Kieselsäure HDK, Wacker Chemie AG) eingesetzt. Im Rahmen dieser Versuche wurde zusätzlich alternativ zum Kaliumsiliziumfluorid als komplexes Fluorid Natriumaluminiumfluorid (Solvay Fluor GmbH) ausgewählt.

Als Schleifkorn wurde jeweils 1 Kilogramm eutektischer Zirkonkorund (Alodur ZK40 P 36, Treibacher Schleifmittel) mit einem Bindersystem in Analogie zum Beispiel 4 in einem Laborfreifallmischer vorgelegt und 5 Minuten gemischt. Anschließend wurde das Pigment zugegeben und das Schleifkorn wurde mit Binder und Pigment für weitere 5 Minuten gemischt. Das so erhaltene Rohmaterial wurde dann für 20 Minuten an der Luft getrocknet und anschließend bei 350 °C für 15 Minuten im Drehrohrofen thermisch behandelt.

Es wurden jeweils 5 Gramm des so ummantelten Schleifkornes mit jeweils 10 ml Wasser in einem Rollrandglas überschichtet und in einem Ultraschallbad (Haver USC 200) für eine Minute mit Ultraschall behandelt. Die Pigmentkonzentration im überstehenden Wasser wurde anschließend mit einem Photometer (WTW Turbo 550) als NTU-Wert bestimmt. Bei dieser Versuchsreihe wurde Kaliwasserglas 42/43 (Mörsil H, Cognis Deutschland GmbH) als Wasserglas, Flugasche (Holcim AG, Deutschland) bzw. eine Mischung aus reaktivem Aluminiumhydroxid (Pseudoböhmit, Sasol Germany) und reaktivem Siliziumoxid (Hochdisperse Kieselsäure HDK, Wacker Chemie AG) als Quelle für Aluminosilikat und Natriumaluminiumfluorid (Solvay Fluor GmbH) alternativ zum Kaliumsiliziumfluorid als komplexes Fluorid eingesetzt.

Die genaue Binderzusammensetzung sowie die photometrischen Messergebnisse (NTU-Wert; umgekehrt proportional der Bindefestigkeit) sind in der Tabelle 5 zusammengefasst

Tabelle 5

| Muster (1 kg) | Binderzusammensetzung | | | | Oxid-pigment (g) | NTU-Wert |
|---|---|---|---|---|---|---|
| | Wasserglas | Wasser | Aluminosilikat (0.3 g) | Alkalifluorid (0.3 g) | | |
| Beispiel 18 | 3.6 g | 2.4 g | Flugasche | $K_2SiF_6$ | 2.0 g | 315 |
| Beispiel 19 | 3.6 g | 2.4 g | Böhmit + HDK | $K_2SiF_6$ | 2.0 g | 345 |
| Beispiel 20 | 3.6 g | 2.4 g | Meta-kaolin | $Na_3AlF_6$ | 2.0 g | 220 |
| Beispiel 21 | 3.6 g | 2.4 g | Böhmit + HDK | $Na_3AlF_6$, | 2.0 g | 433 |

Die Ergebnisse in Tabelle 5 zeigen, dass neben Metakaolin auch andere reaktive Rohstoffe als Ausgangsmaterialien für Geopolymere aus $Al_2O_3$ und $SiO_2$ in Frage kommen, um bei milden Bedingungen eine feste Bindung auf der Schleifkornoberfläche zu erhalten.

Schleiftests

Bandschleifen 1

Auf der Basis von ausgesuchten Mustern (Beispiel 3, Beispiel 5, unbehandelter ZK40) wurden Versuchsschleifbänder (Gewebeunterlage mit Kunstharzbindung) hergestellt, mit denen gewöhnlicher Baustahl (ST37) bzw. Edelstahl (V2A) bearbeitet wurden.
Die Schleifleistung wurde als Abtrag (g) pro Zeiteinheit (min) bestimmt. Die Ergebnisse der Schleiftests sind in der Tabelle 6 zusammengefasst.

Tabelle 6

| Muster | ST 37 (Stahlrohr) Schleifzeit 12 min | | V2A-Fläche Schleifzeit 30 min | |
|---|---|---|---|---|
| | Abtrag | Leistung | Abtrag | Leistung |
| Beispiel 5 | 982 g | 147 % | 739 g | 164 % |
| Beispiel 3 | 854 g | 127 % | 615 g | 137 % |
| ZK 40 unbehandelt | 670 g | 100 % | 450 g | 100 % |

Wie aus den Ergebnissen in Tabelle 6 ersichtlich, konnten durch die Ummantelung deutliche Leistungssteigerungen im Vergleich zum nicht ummantelten Schleifkorn erzielt werden. Eine anschließende optische Analyse der Bänder machte deutlich, dass die Leistungssteigerung in erster Linie darauf zurückzuführen ist, dass unter gleichen Bedingungen bei den mit den erfindungsgemäß ummantelten Schleifkörnern hergestellten Bändern sehr viel weniger Kornausbruch zu verzeichnen war.

Bandschleifen 2

Ebenfalls mit kunstharzgebundenen Gewebebändern wurde mit einem Anpressdruck von 35 N bei einer Schleifzeit von 50 Minuten ein Vollmaterial mit einem Durchmesser von 30 mm bearbeitet.
Als Werkstoffe wurden C45-Stahl und Edelstahl V2A eingesetzt. Die Ergebnisse aus den Schleiftests sind in der Tabelle 7 zusammengefasst.

Tabelle 7

| Muster | Abtrag (g) | | Schleifleistung (%) | |
|---|---|---|---|---|
| | C45 | V2A | C45 | V2A |
| Beispiel 5 | 5332 | 1649 | 132 | 141 |
| Beispiel 3 | 5009 | 1392 | 124 | 119 |
| ZK40 unbehandelt | 4040 | 1170 | 100 | 100 |

Auch die Ergebnisse aus Tabelle 7 zeigen eine deutliche Leistungssteigerung für die Bänder,mit erfindungsgemäß ummanteltem Schleifkorn. Da bei diesem Test die Bänder bis zu ihrer Leistungsgrenze geschliffen wurden, zeigte die anschließende optische Analyse keine großen Unterschiede mehr zwischen den einzelnen Bändern. Anhand einer Abtragskurve pro Zeiteinheit konnte jedoch festgestellt werden, dass die Bänder mit unbehandeltem Zirkonkorund deutlich schneller verschlissen waren.

Bandschleifen 3

Ebenfalls mit kunstharzgebundenen Gewebeschleifbändern wurde als Werkstoffe Rostfreistahl sowie Baustahl unter unterschiedlichen Belastungen und mit unterschiedlicher Dauer bearbeitet. Die Ergebnisse der Testreihe sind in der Tabelle 8 zusammengefasst.

Tabelle 8

| Muster | SUS304 Rostfrei Stahl, hohe Belastung, 5 min | | S50C Baustahl, mittlere Belastung, 30 min | |
|---|---|---|---|---|
| | Abtrag | Leistung | Abtrag | Leistung |
| Beispiel 5 | 797 g | 145 % | 3758 g | 131 % |
| Beispiel 3 | 687 g | 125 % | 3243 g | 113 % |
| ZK40 unbehandelt | 550 g | 100 % | 2870 g | 100 % |

Die Ergebnisse in Tabelle 8 zeigen, dass insbesondere bei hohen Belastungen sowie bei der Bearbeitung von schwierig zu schleifenden Materialien (Rostfrei Stahl) die Vorteile der erfindungsgemäß ummantelten Schleifkörner zum Tragen kommen.

Trennscheibentests

Trennscheibenfertigung

Es wurden jeweils 5 Trennscheiben gefertigt von Schleifkörnern nach Beispiel 5 und Beispiel 3 sowie mit unbehandeltem eutektischem Zirkonkorund ZK40, wobei je 780 g Schleifkorn mit 55 g Flüssigharz (Phenolharz) vermischt wurden und dieses Gemisch anschließend mit 240 g einer Pulvermischung, bestehend aus 50.0 Gew.-% Phenol-Pulverharz, 25.0 Gew.-% Kryolith, 24.0 Gew.-% Pyrit und 1.0 Gew.-% CaO, versetzt wurde. Anschließend wurde ein entsprechender Anteil der Mischung jeweils zu Scheiben mit einem Durchmesser von 178 mm und eine Stärke von 2,8 mm verpresst und innerhalb von 14 Stunden bei 180 °C ausgehärtet.

Testparameter (Trenntest)

| | |
|---|---|
| **Scheibendurchmesser:** | 178 mm |
| **Drehzahl:** | 8.000 rpm |
| **Zustellung:** | 2.0 cm/s |

Nachdem die Scheiben zunächst durch drei Schnitte entgratet worden waren, wurden pro Trennscheibe 20 Schnitte durchgeführt, wobei pro Schnitt eine Bearbeitungszeit von 5.5 Sekunden angesetzt wurde. Dabei wurden die folgenden Werkstoffe bearbeitet.

**Werkstoffe:** Flachstahl V2A (18 % Cr, 10 % Ni) 30 mm x 8 mm Rundstahl, ST 37, 20 Ø

Der G-Faktor wurde jeweils nach 20 Schnitten aus dem Durchschnittswert der 5 Scheiben berechnet nach der Formel:

$$\frac{\text{getrennte Fläche des Werkstoffes}}{\text{Flächenverlust der Trennscheibe}} = \text{G-Faktor}$$

Die Testergebnisse für die Bearbeitung V2A sind in der Tabelle 9 und die Ergebnisse für die Bearbeitung von Baustahl ST 37 in der Tabelle 10 zusammengefasst.

Tabelle 9

| V2A | Getrennte Fläche (mm$^2$) | Scheibenverlust (mm$^2$) | G-Faktor |
|---|---|---|---|
| Beispiel 4 | 4800 | 182 | 26.4 |

# EP 2 050 805 B1

(fortgesetzt)

| V2A | Getrennte Fläche ($mm^2$) | Scheibenverlust ($mm^2$) | G-Faktor |
|---|---|---|---|
| Beispiel 2 | 4800 | 215 | 22.3 |
| ZK40 unbehandelt | 4800 | 350 | 13.7 |

Tabelle 10

| ST 37 | Getrennte Fläche ($mm^2$) | Scheibenverlust ($mm^2$) | G-Faktor |
|---|---|---|---|
| Beispiel 4 | 6280 | 165 | 38.1 |
| Beispiel 2 | 6280 | 197 | 31.9 |
| ZK40 unbehandelt | 6280 | 259 | 24.2 |

In beiden Bearbeitungsfällen ist zu erkennen, dass durch die erfindungsgemäße Ummantelung eine deutliche Steigerung des G-Faktors erreicht wird. Da bei beiden oben aufgeführten Bearbeitungsfällen die Anzahl der Schnitte für sämtliche Muster gleich waren und die Werkstoffe sowie das Basisschleifkorn identisch waren, ist der höhere G-Faktor nahezu ausschließlich auf den jeweils geringeren Scheibenverlust zurückzuführen, der wiederum nur von der Einbindung des Korns abhängt. Da auch jeweils die gleiche Bindemittelzusammensetzung eingesetzt wurde, lassen sich aus den in den Tabellen 9 und 10 aufgeführten Ergebnissen direkte Rückschlüsse auf die Qualität der Ummantelung ziehen.

**Patentansprüche**

1. Schleifkörner aus der Gruppe Korund, Schmelzkorund, Sinterkorund, Zirkonkorund, Siliziumcarbid, Borcarbid, kubisches Bornitrid, Diamant und/oder Gemische davon mit einer einen Binder und ein feinstteiliges anorganisches Pulver umfassenden Ummantelung,
   **dadurch gekennzeichnet , dass** die Basis für den Binder

   - ein Aluminosilikat mit einem molaren Mengenverhältnis von $Al_2O_3$ zu $SiO_2$ von 1:2 bis 1:20,
   - Wasserglas und
   - Wasser
   umfasst.

2. Schleifkörner nach Anspruch 1,
   **dadurch gekennzeichnet , dass**
   der Binder zusätzlich mindestens ein komplexes Alkalifluorid umfasst.

3. Schleifkörner nach Anspruch 2,
   **dadurch gekennzeichnet, dass**
   die chemische Zusammensetzung des Binders ca. 5 bis ca. 30 Gew.-% $SiO_2$, ca. 60 bis ca. 90 Gew.-% $H_2O$, ca. 1 bis ca. 10 Gew-% $Al_2O_3$ und ca. 5 bis ca. 15 Gew.-% Alkalifluorid beträgt.

4. Schleifkörner nach einem der Ansprüche 1 bis 3,
   **dadurch gekennzeichnet, dass**
   der Anteil des Binders ca 0.01 bis ca. 10.0 Gew.-%, bezogen auf das unbehandelte Schleifkorn, beträgt.

5. Schleifkörner nach einem der Ansprüche 2 bis 4,
   **dadurch gekennzeichnet dass**
   sich der Binder zusammensetzt aus ca. 0.005 bis ca. 4.0 Gew.-% Wasserglas, ca. 0.005 bis ca. 4.0 Gew.-% Wasser, ca. 0.0005 bis ca. 1.0 Gew.-% Aluminosilikat und ca. 0.001 bis ca. 1.0 Gew.-% Alkalifluorid, jeweils bezogen auf das unbehandelte Schleifkorn.

6. Schleifkörner nach einem der Ansprüche 1 bis 5,
   **dadurch gekennzeichnet, dass**

das Aluminosilikat ausgewählt ist aus der Gruppe umfassend Metakaoline, Flugaschen, Hüttenschlacken, Feinsande und aktive Tone.

7. Schleifkörner nach einem der Ansprüche 1 bis 6,
   **dadurch gekennzeichnet, dass**
   das Aluminosilikat ein bei der Ummantelungsreaktion in situ entstandenes Produkt aus reaktivem $Al_2O_3$ wie z.B. Böhmit, und reaktivem $SiO_2$, wie z.B. kolloidale Kieselsäure, umfasst.

8. Schleifkörner nach einem der Ansprüche 1 bis 7,
   **dadurch gekennzeichnet, dass**
   das Aluminosilikat ein durch Polykondensation aus reaktivem $Al_2O_3$ und $SiO_2$ gebildetes Gel mit einem dreidimensionales Netzwerk aus $SiO_4$- und $AlO_4$-Tetraedern ist.

9. Schleifkörner nach einem der Ansprüche 2 bis 8,
   **dadurch gekennzeichnet, dass**
   das mindestens eine komplexe Alkalifluorid ausgewählt ist aus der Gruppe $Na_2AlF_6$, $K_2NaAlF_6$, $Na_2SiF_6$, $K_2SiF_6$, $NaBF_4$ und $KBF_4$.

10. Schleifkörner nach einem der Ansprüche 1 bis 9,
    **dadurch gekennzeichnet, dass**
    der Binder zusätzlich Füllstoffe und/oder Schleifhilfsmittel umfasst, ausgewählt aus der Gruppe der Sulfide, Phosphate, Carbonate und/oder Halogenide und/oder sulfid-, phosphat-, carbonat- und/oder halogenidhaltigen Komplexverbindungen aus der Gruppe der Elemente Na, Li, K, Mg, Ca, Al, Mn, Cu, Sn, Fe, Ti, Sb und/oder Zn.

11. Schleifkörner nach einem der Ansprüche 1 bis 10,
    **dadurch gekennzeichnet, dass**
    das feinstteilige anorganische Pulver ein Oxidpigment ist.

12. Schleifkörner nach einem der Ansprüche 1 bis 11,
    **dadurch gekennzeichnet, dass**
    die Ummantelung ca. 0.002 bis ca. 5.0 Gew.-% feinstteiliges anorganisches Pulver, bezogen auf das unbehandelte Schleifkorn, aufweist.

13. Schleifkörner nach einem der Ansprüche 1 bis 12,
    **dadurch gekennzeichnet, dass**
    die Ummantelung bevorzugt ca. 0.1 bis ca. 2.0 Gew.-% feinstteiliges anorganisches Pulver, bezogen auf das unbehandelte Schleifkorn, aufweist.

14. Schleifkörner nach einem der Ansprüche 1 bis 13,
    **dadurch gekennzeichnet, dass**
    der Binder bei einer Temperatur von ≤ 400 °C aushärtbar ist.

15. Verfahren zur Herstellung von Schleifkörnern nach einem der Ansprüche bis 14, umfassend die Schritte

    - Benetzen der Schleifkörner mit einem Binder in einem Intensivmischer;
    - Versetzen der benetzten Schleifkörner mit einem feinstteiligen anorganischen Pulver;
    - Vermischen der Schleifkörner mit dem feinstteiligen anorganischen Pulver, bis das Pulver gleichmäßig auf der Oberfläche der Schleifkörner verteilt ist, und
    - Aushärten der Ummantelung bei einer Temperatur von ≤ 400 °C

    **dadurch gekennzeichnet, dass** ein Binder auf der Basis

    - Aluminosilikat mit einem molaren Mengenverhältnis von $Al_2O_3$ zu $SiO_2$ von 1:2 bis 1:20,
    - Wasserglas und
    - Wasser eingesetzt wird.

16. Verfahren nach Anspruch
    **dadurch gekennzeichnet, dass**

ein Binder eingesetzt wird, der zusätzlich mindestens ein komplexes Alkalifluorid umfasst.

17. Verfahren nach Anspruch 16,
**dadurch gekennzeichnet, dass**
ein Binder mit der chemischen Zusammensetzung von ca. 5 bis ca. 30 Gew.-% $SiO_2$, ca. 60 bis ca. 90 Gew.-% $H_2O$, ca. 1 bis ca. 10 Gew-% $Al_2O_3$ und ca. 5 bis ca. 15 Gew.-% Alkalifluorid eingesetzt wird

18. Verwendung von Schleifkörnern nach einem der Ansprüche 1 bis 14 zur Herstellung von Schleifmitteln, insbesondere zur Herstellung von Schleifmitteln auf Unterlage.

**Claims**

1. Abrasive grains from the group corundum, fused corundum, sintered corundum, zircon corundum, silicon carbide, boron carbide, cubic boron nitride, diamond and/or mixtures thereof with a coating comprising a binder and a finely divided inorganic powder, **characterised in that** the base for the binder comprises

   - an aluminosilicate having a molar ratio of $Al_2O_3$ to $SiO_2$ of 1:2 to 1:20,
   - water glass, and
   - water.

2. Abrasive grains according to claim 1, **characterised in that** the binder additionally comprises at least one complex alkali fluoride.

3. Abrasive grains according to claim 2, **characterised in that** the chemical composition of the binder is approximately 5 to approximately 30% by weight of $SiO_2$, approximately 60 to approximately 90% by weight of $H_2O$, approximately 1 to approximately 10% by weight of $Al_2O_3$ and approximately 5 to approximately 15% by weight of alkali fluoride.

4. Abrasive grains according to one of claims 1 to 3,
**characterised in that** the proportion of the binder is approximately 0.01 to approximately 10.0% by weight, based on the untreated abrasive grain.

5. Abrasive grains according to one of claims 2 to 4,
**characterised in that** the binder is composed of approximately 0.005 to approximately 4.0% by weight of water glass, approximately 0.005 to approximately 4.0% by weight of water, approximately 0.0005 to approximately 1.0% by weight of aluminosilicate and approximately 0.001 to approximately 1.0% by weight of alkali fluoride, in each case based on the untreated abrasive grain.

6. Abrasive grains according to one of claims 1 to 5,
**characterised in that** the aluminosilicate is selected from the group comprising metakaolins, fly ashes, slags, fine sands and activated clays.

7. Abrasive grains according to one of claims 1 to 6,
**characterised in that** the aluminosilicate comprises a product of reactive $Al_2O_3$, such as e.g. boehmite, and reactive $SiO_2$, such as e.g. colloidal silicic acid, said product being produced in situ during the coating reaction.

8. Abrasive grains according to one of claims 1 to 7,
**characterised in that** the aluminosilicate is a gel which is formed by polycondensation from reactive $Al_2O_3$ and $SiO_2$ and which comprises a three-dimensional network of $SiO_4$ and $AlO_4$ tetrahedra.

9. Abrasive grains according to one of claims 2 to 8,
**characterised in that** the at least one complex alkali fluoride is selected from the group $Na_3AlF_6$, $K_2NaAlF_6$, $Na_2SiF_6$, $K_2SiF_6$, $NaBF_4$ and $KBF_4$.

10. Abrasive grains according to one of claims 1 to 9,
**characterised in that** the binder additionally comprises fillers and/or grinding aids, selected from the group consisting of sulphides, phosphates, carbonates and/or halides and/or sulphide-, phosphate-, carbonate- and/or halide-containing complex compounds from the group of elements Na, Li, K, Mg, Ca, Al, Mn, Cu, Sn, Fe, Ti, Sb and/or Zn.

**11.** Abrasive grains according to one of claims 1 to 10,
**characterised in that** the finely divided inorganic powder is an oxide pigment.

**12.** Abrasive grains according to one of claims 1 to 11,
**characterised in that** the coating comprises approximately 0.002 to approximately 5.0% by weight of finely divided inorganic powder, based on the untreated abrasive grain.

**13.** Abrasive grains according to one of claims 1 to 12,
**characterised in that** the coating preferably comprises approximately 0.1 to approximately 2.0% by weight of finely divided inorganic powder, based on the untreated abrasive grain.

**14.** Abrasive grains according to one of claims 1 to 13,
**characterised in that** the binder is curable at a temperature of $\leq 400°C$.

**15.** Method for producing abrasive grains according to one of claims 1 to 14, comprising the steps

- wetting the abrasive grains with a binder in an intensive mixer;
- adding a finely divided inorganic powder to the wetted abrasive grains;
- mixing the abrasive grains with the finely divided inorganic powder until the powder is uniformly distributed on the surface of the abrasive grains, and
- curing the coating at a temperature of $\leq 400°C$,

**characterised in that** use is made of a binder based on

- aluminosilicate having a molar ratio of $Al_2O_3$ to $SiO_2$ of 1:2 to 1:20,
- water glass, and
- water.

**16.** Method according to claim 15, **characterised in that** use is made of a binder which additionally comprises at least one complex alkali fluoride.

**17.** Method according to claim 16, **characterised in that** use is made of a binder having the chemical composition of approximately 5 to approximately 30% by weight of $SiO_2$, approximately 60 to approximately 90% by weight of $H_2O$, approximately 1 to approximately 10% by weight of $Al_2O_3$ and approximately 5 to approximately 15% by weight of alkali fluoride.

**18.** Use of abrasive grains according to one of claims 1 to 14 for producing abrasives, in particular for producing abrasives on a substrate.

**Revendications**

**1.** Grains abrasifs formés du groupe du corindon, du corindon fondu, du corindon fritté, du zirconium-corindon, du carbure de silicium, du carbure de bore, du nitrure de bore cubique, du diamant et/ou de mélange de ces produits avec un liant et un enrobage en poudre anorganique très finement divisée, **caractérisés en ce que** la base du liant comprend :

- un aluminosilicate avec un rapport moléculaire de $Al_2O_3$ sur $SiO_2$ compris entre 1:2 et 1:20,
- du silicate de soude, et
- de l'eau.

**2.** Grains abrasifs selon la revendication 1, **caractérisés en ce que** le liant comporte en plus au moins un fluorure alcalin complexe.

**3.** Grains abrasifs selon la revendication 2, **caractérisés en ce que** la composition chimique du liant comprend entre environ 5 et environ 30 % pondéraux de $SiO_2$, entre environ 60 et environ 90 % pondéraux de $H_2O$ entre environ 1 et environ 10 % pondéraux de $Al_2O_3$ et entre environ 5 et environ 15 % pondéraux de fluorure alcalin.

**4.** Grains abrasifs selon l'une des revendications 1 à 3, **caractérisés en ce que** la fraction de liant est comprise entre environ 0,01 jusqu'à environ 10,0 % pondéraux par rapport aux grains abrasifs non traités.

**5.** Grains abrasifs selon l'une des revendications 2 à 4, **caractérisés en ce que** le liant se compose d'environ 0,005 jusqu'à environ 4,0 % pondéraux de silicate de soude, d'environ 0,005 jusqu'à environ 4,0 % pondéraux d'eau, environ 0,0005 jusqu'à environ 1,0 % pondéraux d'aluminosilicate et d'environ 0,001 jusqu'à environ 1,0 % pondéraux de fluorure alcalin rapportés chaque fois aux grains abrasifs non traités.

**6.** Grains abrasifs selon l'une des revendications 1 à 5, **caractérisés en ce que** l'aluminosilicate est choisi dans le groupe comprenant : le métakaolin, les cendres volantes, les scories de hauts fourneaux, le sable fin, les argiles actives.

**7.** Grains abrasifs selon l'une des revendications 1 à 6, **caractérisés en ce que** l'aluminosilicate est un produit obtenu in situ par la réaction d'enrobage de $Al_2O_3$ réactif tel que par exemple de la böhmite, avec du $SiO_2$ réactif tel que par exemple de l'acide silicique à l'état colloïdal.

**8.** Grains abrasifs selon l'une des revendications 1 à 7, **caractérisés en ce que** l'aluminosilicate est un gel formé par polycondensation à partir de $Al_2O_3$ réactif et de $SiO_2$ avec un réseau tridimensionnel formé de tétraèdres de $SiO_4$ et $AlO_4$.

**9.** Grains abrasifs selon l'une des revendications 2 à 8, **caractérisés en ce qu'**on choisit au moins un fluorure alcalin complexe dans le groupe suivant :

$Na_3AlF_6$, $K_2NaAlF_6$, $Na_2SiF_6$, $K_2SiF_6$, $NaBF_4$ et $KBF_4$.

**10.** Grains abrasifs selon l'une des revendications 1 à 9, **caractérisés en ce que** le liant comporte des charges et/ou des agents auxiliaires abrasifs choisis dans le groupe comprenant : les sulfures, les phosphates, les carbonates et/ou les halogénures et/ou les combinaisons complexes de sulfures, de phosphates, de carbonates, et/ou d'halogénures du groupe formé des éléments Na, Li, K, Mg, Ca, Al, Mn, Cu, Sn, Fe, Ti, Sb et/ou Zn.

**11.** Grains abrasifs selon l'une des revendications 1 à 10, **caractérisés en ce que** la poudre anorganique très finement divisée, est un pigment d'oxydes.

**12.** Grains abrasifs selon l'une des revendications 1 à 11, **caractérisés en ce que** l'enrobage comporte entre environ 0,002 jusqu'à environ 5,0 % pondéraux de poudre anorganique très finement divisée, par rapport aux grains abrasifs non traités.

**13.** Grains abrasifs selon l'une des revendications 1 à 12, **caractérisés en ce que** l'enrobage comporte de préférence entre environ 0,1 jusqu'à environ 2,0 % pondéraux de poudre anorganique très finement divisée rapportée à des grains abrasifs non traités.

**14.** Grains abrasifs selon l'une des revendications 1 à 13, **caractérisés en ce que** le liant est durci à une température ≤ 400°C.

**15.** Grains abrasifs selon l'une des revendications 1 à 14, comprenant les étapes suivantes :

- mouillage des grains abrasifs avec un liant dans un mélangeur intensif,
- assemblage des grains abrasifs mouillés avec une poudre anorganique très finement divisée,
- mélange des grains abrasifs avec la poudre anorganique très finement divisée jusqu'à ce que la poudre soit répartie régulièrement à la surface des grains abrasifs, et
- durcissement de l'enrobage à une température ≤ 400°C,

**caractérisés en ce qu'**
on utilise un liant à base de :

- aluminosilicate avec un rapport molaire de $Al_2O_3$ sur $SiO_2$, compris entre 1:2 et 1:20,
- silicate de soude, et
- eau.

**16.** Grains abrasifs selon la revendication 15, **caractérisés en ce qu'**on utilise un liant comportant en outre au moins un fluorure alcalin complexe.

**17.** Procédé selon la revendication 16, **caractérisé en ce qu'**on utilise un liant ayant une composition chimique d'environ 5 jusqu'à environ 30 % pondéraux de $SiO_2$, entre environ 60 jusqu'à environ 90 % pondéraux de $H_2O$, entre environ 1 et environ 10 % pondéraux de $Al_2O_3$ et entre environ 5 et environ 15 % pondéraux de fluorure alcalin

**18.** Application de grains abrasifs selon l'une des revendications 1 à 14, pour la fabrication de produits abrasifs, notamment pour la fabrication de produits abrasifs sur un support.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2527044 A
- EP 0014236 A1
- DE 10257554 A1
- EP 0518962 B1

**In der Beschreibung aufgeführte Nicht-Patentliteratur**

- Solid phase synthesis of a mineral blockpolymer by low temperature polycondensation of aluminosilicate polymers. **J. Davidovits.** I.U.P.A.C. International Symposium on Macromolecules. September 1976